# EUROPEAN PATENT SPECIFICATION

(11) **EP 4 428 438 B1**
(45) Date of publication and mention of the grant of the patent: **10.12.2025**
(21) Application number: 23181907.9
(22) Date of filing: 27.06.2023
(51) Int. Cl.: F23D 14/06, F23D 14/64

(54) **BURNER WITH CENTRAL SWIRL EJECTION STRUCTURE**
BRENNER MIT ZENTRALER WIRBELAUSSTOSSSTRUKTUR
BRÛLEUR À STRUCTURE D'ÉJECTION DE TOURBILLON CENTRALE

(30) Priority: 06.03.2023 CN 202320399367 U
(43) Date of publication of application: 11.09.2024
(73) Proprietor: Guangdong Sleek Intelligent Technology Co., Ltd, Foshan City, Guangdong Province (CN)
(72) Inventor: Li, Zhoucheng, Chengzhong Town, Ningming County, Guangxi Province (CN); SHI, Fa en, Ganzhou City, Jiangxi Province (CN); Tian, Xiaorong, Ziyang City, Sichuan Province (CN); Mo, Qiuxia, Huilong Town, Deqing County, Guangdong Province (CN); Mo, Weideng, Foshan City, Guangdong Province (CN); Ai, Baohua, Zhongshan City, Guangdong Province (CN); Yang, Yuanlin, Huayang Town, Wuhua County, Guangdong Province (CN); Mo, Yunzhen, Qinglong Township, Pingle County, Guangxi Province (CN)
(74) Representative: Chung, Hoi Kan

(56) References cited:
- CN-A- 107 036 099
- CN-U- 218 763 390

## Description

### TECHNICAL FIELD

The present disclosure relates to the technical field of gas cookers, and in particular, to an upside-entrainment burner with a central swirl ejection structure.

### BACKGROUND

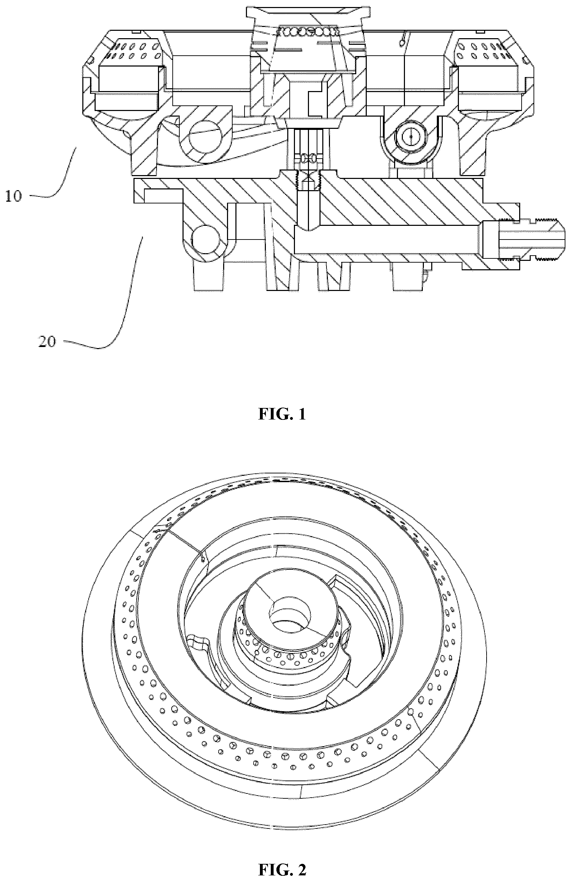

As a main combustion component of a gas cooker, the combustion efficiency of the burner has always been a focus of design and research of manufacturers. For a two-ring or three-ring burner, a gas distribution seat supplies gas to an inner ring for an inner-ring gas channel, generally, an inner-ring gas supply channel arranged as a vertical cylinder or an annular cylinder, in a manner of arranging a gas nozzle or an ejection pipe below the channel, for example, as shown in FIG. 1. However, the arrangement space of the inner-ring gas channel is small, and the ejection capacity of the inner-ring gas supply channel is difficult to improve, resulting in limited improvement in combustion efficiency. Therefore, it is necessary to perform further optimization design on the inner-ring gas supply structure of a burner. CN 107036099 A discloses a cooktop burner having a gas distribution seat arranged above an ejection pipe seat.

### SUMMARY

The present invention aims to solve at least one of the technical problems in the related art. For this purpose, the present invention provides an upside-entrainment burner with a central swirl ejection structure.

The technical solution adopted by an embodiment of the present invention to solve its technical problem is that: an upside-entrainment burner with a central swirl ejection structure includes a gas distribution seat and an ejection pipe seat.

The gas distribution seat is arranged above the ejection pipe seat. The gas distribution seat and the ejection pipe seat enclose to form an annular inner-ring gas mixing chamber extending vertically.

The ejection pipe seat is provided with an annular spiral chamber and an inner-ring ejection channel. The upper part of the annular spiral chamber is communicated with the inner-ring gas mixing chamber, and the lower part is communicated with the inner-ring ejection channel. The annular spiral chamber is arranged in an annular spiral structure; and in the gas flowing and rotating direction, the size of the cross section of the annular spiral chamber is gradually reduced.

Optionally, a lower wall surface of the inner-ring ejection channel is obliquely arranged; and in the flowing and forward feeding direction of the gas, the size of the cross section of the inner-ring ejection channel is gradually reduced.

Optionally, the inner-ring gas mixing chamber includes an upper gas mixing chamber and a lower gas mixing chamber that are communicated with each other. The upper gas mixing chamber is arranged above the lower gas mixing chamber; and the lower gas mixing chamber is communicated with the annular spiral chamber.

Optionally, the size of the cross section of the lower gas mixing chamber in a horizontal radial direction is greater than that of the cross section of the upper gas mixing chamber in the horizontal radial direction; and the size of the cross section of the annular spiral chamber is greater than that of the cross section of the upper gas mixing chamber in the horizontal radial direction.

Optionally, the gas distribution seat and the ejection pipe seat are provided with a sealing convex rib and a sealing groove that fit each other; and the sealing convex rib and the sealing groove are arranged on the outer edges of the inner-ring ejection channel and the annular spiral chamber.

The present invention has the following beneficial effects: the ejection pipe seat is provided with the annular spiral chamber and the inner-ring ejection channel, and the annular spiral chamber is arranged in the annular spiral structure, so that gas may form a spirally rotating and ascending gas flow in the annular spiral chamber. The size of the cross section of the annular spiral chamber is gradually reduced, so that the gas will be gradually compressed and accelerated to flow as it rotating and flowing forward, thereby effectively improving the mixing ratio of fuel and air, and improving the ejection performance of the inner-ring gas supply channel in the upside-entrainment burner and the heat efficiency of the overall burner. According to the present invention, inner-ring gas is rotated, accelerated and compressed in limited arrangement space of a furnace seat of an upside-entrainment burner, which effectively improves the ejection performance of an ejection pipe and the heat efficiency of the overall burner.

In order to make the above purposes, features, and advantages of the present invention clearer and easier to understand, preferred embodiments are listed hereinafter and are described in detail in combination with the accompanying drawings.

### BRIEF DESCRIPTION OF THE DRAWINGS

The above and/or additional aspects and advantages of the present disclosure will become apparent and readily understood from the description of the embodiments in combination with the accompanying drawings.
FIG. 1 is a schematic structural diagram of an inner-ring gas channel of an upside-entrainment burner in a related art;
FIG. 2 is a schematic structural diagram of an upside-entrainment burner with a central swirl ejection structure of the present invention;
FIG. 3 is a vertical view of an upside-entrainment burner with a central swirl ejection structure in FIG. 2;
FIG. 4 is a sectional view along V1-V1 in FIG. 3;
FIG. 5 is a sectional view along of V2-V2 in FIG. 3;
FIG. 6 is a decomposition diagram of an upside-entrainment burner with a central swirl ejection structure in FIG. 2; and
FIG. 7 is a decomposition diagram of an upside-entrainment burner with a central swirl ejection structure in FIG. 6 in another perspective.

Reference signs in the drawings:
10, gas distribution seat; 11, sealing convex rib; 20, ejection pipe seat; 21, sealing groove; 30, inner-ring gas mixing chamber; 31, upper gas mixing chamber; 32, lower gas mixing chamber; 40, annular spiral chamber; and 50, inner-ring ejection channel.

### DETAILED DESCRIPTION OF THE EMBODIMENTS

This part will describe specific embodiments of the present invention in detail. Better embodiments of the present invention are shown in the accompanying drawings. The function of the accompanying drawings is to supplement the description of the text part of the specification with graphics, so that people can intuitively and vividly understand each technical feature and overall technical solution of the present disclosure, but it cannot be understood as a limitation to the protection scope of the present invention being defined by the claims.

In the description of the present disclosure, "a plurality of" means two or more, "greater than, less than, more than, and the like" means not including the number, and "above, below, within, and the like" means including the number. If "first" and "second are described, they are only used for distinguishing technical features, but cannot be construed as indicating or implying relative importance or implicitly indicating the number of indicated technical features or implicitly indicating the precedence relationship of the indicated technical features.

In the description of the present disclosure, it should be understood that, if orientation description is involved, orientation or positional relationships indicated by "upper", "lower", "front", "rear", "left ", "right", and the like are orientations or positional relationships shown based on the accompanying drawings, which are merely used for the convenience of describing the present disclosure and simplifying the description, rather than indicating or implying that the devices or elements must have particular orientations, and constructed and operated in particular orientations. Thus, it cannot be construed as a limitation to the present disclosure.

In the present disclosure, unless otherwise specified, words "arrange", "mount", "connect", and the like should be broadly understood. For example, the terms may refer to direct connection, or indirect connection through an intermediate medium, or may be fixed connection or detachable connection, or integrated molding, or may be mechanical connection, or may be communication inside two components or an interaction relationship of the two components. Those skilled in the art can reasonably determine specific meanings of the abovementioned words in the present disclosure in combination with the specific content of the technical solution.

### Embodiment

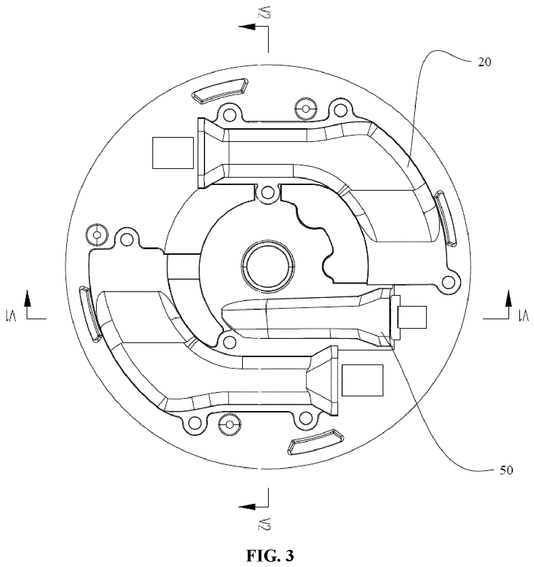

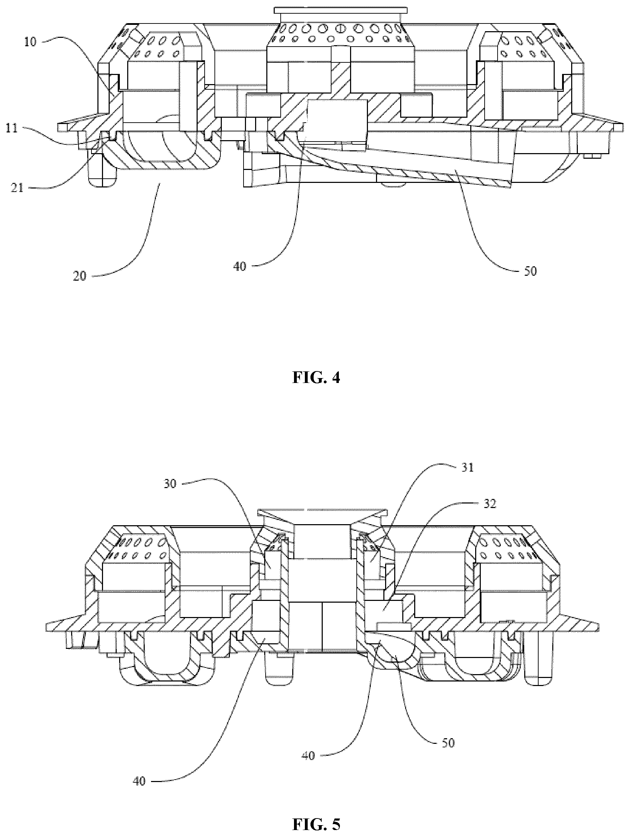

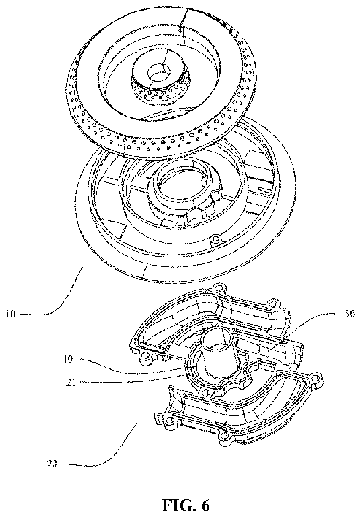

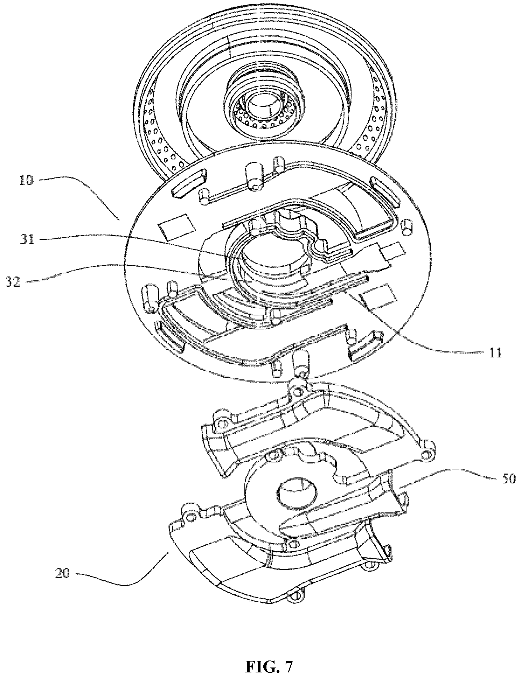

Referring to FIG. 2 to FIG. 7, an upside-entrainment burner with a central swirl ejection structure provided by the present invention includes a gas distribution seat 10 and an ejection pipe seat 20.

The gas distribution seat 10 is arranged above the ejection pipe seat 20. The gas distribution seat 10 and the ejection pipe seat 20 enclose to form an annular inner-ring gas mixing chamber 30 extending vertically.

The ejection pipe seat 20 is provided with an annular spiral chamber 40 and an inner-ring ejection channel 50. The upper part of the annular spiral chamber 40 is communicated with the inner-ring gas mixing chamber 30, and the lower part is communicated with the inner-ring ejection channel 50. The annular spiral chamber 40 is arranged in an annular spiral structure; and in the gas flowing and rotating direction, the size of the cross section of the annular spiral chamber 40 is gradually reduced.

In the present invention, the ejection pipe seat 20 is provided with the annular spiral chamber 40 and the inner-ring ejection channel 50, and the annular spiral chamber 40 is arranged in the annular spiral structure, so that gas may form a spirally rotating and ascending gas flow in the annular spiral chamber 40. The size of the cross section of the annular spiral chamber 40 is gradually reduced, so that the gas will be gradually compressed and accelerated to flow as it rotating and flowing forward, thereby effectively improving the mixing ratio of fuel and air, and improving the ejection performance of the inner-ring gas supply channel in the upside-entrainment burner and the heat efficiency of the overall burner. According to the present invention, inner-ring gas is rotated, accelerated and compressed in limited arrangement space of a furnace seat of an upside-entrainment burner, which effectively improves the ejection performance of an ejection pipe and the heat efficiency of the overall burner.

A lower wall surface of the inner-ring ejection channel 50 is obliquely arranged; and in the flowing and forward feeding direction of the gas, the size of the cross section of the inner-ring ejection channel 50 is gradually reduced. The lower wall surface of the inner-ring ejection channel 50 is obliquely arranged, and a structural design is simple, that is, the size of the cross section of the inner-ring ejection channel 50 is gradually reduced, thereby achieving effects of compressing and feeding the gas.

In some embodiments, the inner-ring gas mixing chamber 30 includes an upper gas mixing chamber 31 and a lower gas mixing chamber 32 that are communicated with each other. The upper gas mixing chamber 31 is arranged above the lower gas mixing chamber 32; and the lower gas mixing chamber 32 is communicated with the annular spiral chamber 40. The inner-ring gas mixing chamber 30 is layered into a multi-layer gas mixing chamber structure, so that a further mixing effect will be achieved on the gas during a rotating and ascending process of the gas due to a change of a cylinder diameter.

Specifically, the size of the cross section of the lower gas mixing chamber 32 in a horizontal radial direction is greater than that of the cross section of the upper gas mixing chamber 31 in the horizontal radial direction; and the size of the cross section of the annular spiral chamber 40 is greater than that of the cross section of the lower gas mixing chamber 32 in the horizontal radial direction. The sizes of the cross sections of the three layers of gas mixing chamber space from bottom to top are gradually reduced. During supplying upward, rotating, and ascending, the gas will be rotated, compressed, and accelerated repeatedly, the gas flows smoothly and has a good mixing effect, and the ejecting coefficient at a fire hole of a fire cap is high.

In this embodiment, in order to ensure a sealing effect, the gas distribution seat 10 and the ejection pipe seat 20 are provided with a sealing convex rib 11 and a sealing groove 21 that fit each other; and the sealing convex rib 11 and the sealing groove 21 are arranged on the outer edges of the inner-ring ejection channel 50 and the annular spiral chamber 40. The sealing convex rib 11 and the sealing groove 21 fit each other, so that an effective sealing anti-leakage effect can be achieved after the distribution seat 10 and the ejection pipe seat 20 are spliced.

In this embodiment, simulation models are respectively established according to an old central ejection structure as shown in FIG. 1 and a new central swirl ejection structure of the present disclosure to simulate parameters such as an ejecting coefficient and gas flow at a fire hole output position of an inner-ring fire cap. Analysis data is as shown in Table 1 as follows:

**Table 1**

| | | Mole fraction of propane | Mole fraction of butane | Mole fraction of oxygen | Ejecting coefficient of fire hole outlet | Flow velocity of fire hole outlet (m/s) |
|---|---|---|---|---|---|---|
| Old | Inner fire hole | 0.043352596 | 0.014450869 | 0.19786218 | 0.63684 | 0.85475826 |
| This embodiment | Inner fire hole | 0.038966852 | 0.01298833 | 0.19908672 | 0.712912 | 1.2161015 |
| | Inner flame stabilizing hole | 0.038949 522 | 0.012982553 | 0.19909156 | 0.713247 | 1.1291533 |

Further, simulation Geometric models established corresponding to pot using environments are respectively established for the old central swirl ejection structure in FIG. 1 and a new central swirl ejection structure of the present disclosure, so as to simulate, calculate, and actually detect analysis data of heat efficiency as shown in Table 2 below:

**Table 2**

| Model | Gas type | Pot body absorption heat | Heat load simulation value | Simulated heat efficiency | Hot body heat resistance | Ideal simulated heat efficiency (after heat transfer correction) | Actually detected heat load | Actually detected heat efficiency |
|---|---|---|---|---|---|---|---|---|
| Old | Liquefied petroleum gas | 1610 W | 2354 W | 68.4% | 82 W | 64.9% | 2223 W | 66.3% |
| New | Liquefied petroleum gas | 1939 W | 2970 W | 65.3% | 92 W | 63.2% | 2851 W | 63.4% |

It can be seen from Table 1 and Table 2 that the fire hole outlet ejecting coefficient, the outlet flow velocity, the simulated heat efficiency, and the actually detected heat efficiency of the upside-entrainment burner with the central swirl ejection structure of the present invention are obviously improved.

## Claims

1. An upside-entrainment burner with a central swirl ejection structure, comprising a gas distribution seat (10) and an ejection pipe seat (20), wherein
the gas distribution seat (10) is arranged above the ejection pipe seat (20); the gas distribution seat (10) and the ejection pipe seat (20) enclose to form an annular inner-ring gas mixing chamber (30) extending vertically;
the ejection pipe seat (20) is provided with an annular spiral chamber (40) and an inner-ring ejection channel (50); the upper part of the annular spiral chamber (40) is communicated with the inner-ring gas mixing chamber (30), and the lower part is communicated with the inner-ring ejection channel (50); the annular spiral chamber (40) is arranged in an annular spiral structure; and in the gas flowing and rotating direction, the size of the cross section of the annular spiral chamber (40) is gradually reduced.

2. The upside-entrainment burner with a central swirl ejection structure according to claim 1, wherein a lower wall surface of the inner-ring ejection channel (50) is obliquely arranged; and in the flowing and forward feeding direction of the gas, the size of the cross section of the inner-ring ejection channel (50) is gradually reduced.

3. The upside-entrainment burner with a central swirl ejection structure according to claim 1, wherein the inner-ring gas mixing chamber (30) comprises an upper gas mixing chamber (31) and a lower gas mixing chamber (32) that are communicated with each other; the upper gas mixing chamber (31) is arranged above the lower gas mixing chamber (32); and the lower gas mixing chamber (32) is communicated with the annular spiral chamber (40).

4. The upside-entrainment burner with a central swirl ejection structure according to claim 3, wherein the size of the cross section of the lower gas mixing chamber (32) in a horizontal radial direction is greater than that of the cross section of the upper gas mixing chamber (31) in the horizontal radial direction; and the size of the cross section of the annular spiral chamber (40) is greater than that of the cross section of the lower gas mixing chamber (32) in the horizontal radial direction.

5. The upside-entrainment burner with a central swirl ejection structure according to claim 1, wherein the gas distribution seat (10) and the ejection pipe seat (20) are provided with a sealing convex rib (11) and a sealing groove (21) that fit each other; and the sealing convex rib (11) and the sealing groove (21) are arranged on the outer edges of the inner-ring ejection channel (50) and the annular spiral chamber (40).

## Patentansprüche

1. Aufwärtsströmungsbrenner mit einer zentralen Wirbelausstoßstruktur, umfassend einen Gasverteilungssitz (10) und einen Ausstoßrohrsitz (20), wobei
der Gasverteilungssitz (10) oberhalb des Ausstoßrohrsitzes (20) angeordnet ist; der Gasverteilungssitz (10) und der Ausstoßrohrsitz (20) eine ringförmige, vertikal verlaufende Innenring-Gasmischkammer (30) umschließen;
der Ausstoßrohrsitz (20) mit einer ringförmigen Spiralkammer (40) und einem Innenring-Ausstoßkanal (50) versehen ist; der obere Teil der ringförmigen Spiral-Kammer (40) mit der Innenring-Gasmischkammer (30) verbunden ist und der untere Teil mit dem Innenring-Ausstoßkanal (50) verbunden ist; die ringförmige Spiralkammer (40) in einer ringförmigen Spiralstruktur angeordnet ist; und in der Gasströmungs- und Rotationsrichtung die Größe des Querschnitts der ringförmigen Spiralkammer (40) allmählich reduziert wird.

2. Aufwärtsströmungsbrenner mit einer zentralen Wirbelausstoßstruktur nach Anspruch 1, wobei eine untere Wandfläche des Innenring-Ausstoßkanals (50) schräg angeordnet ist; und in der Gasströmungs- und Vorschubrichtung die Größe des Querschnitts des Innenring-Ausstoßkanals (50) allmählich reduziert wird.

3. Aufwärtsströmungsbrenner mit einer zentralen Wirbelausstoßstruktur nach Anspruch 1, wobei die Innenring-Gasmischkammer (30) eine obere Gasmischkammer (31) und eine untere Gasmischkammer (32) umfasst, die miteinander verbunden sind; die obere Gasmischkammer (31) oberhalb der unteren Gasmischkammer (32) angeordnet ist; und die untere Gasmischkammer (32) mit der ringförmigen Spiralkammer (40) verbunden ist.

4. Aufwärtsströmungsbrenner mit einer zentralen Wirbelausstoßstruktur nach Anspruch 3, wobei die Größe des Querschnitts der unteren Gasmischkammer (32) in horizontaler Radialrichtung größer ist als die des Querschnitts der oberen Gasmischkammer (31) in horizontaler Radialrichtung; und die Größe des Querschnitts der ringförmigen Spiralkammer (40) größer ist als die des Querschnitts der unteren Gasmischkammer (32) in horizontaler Radialrichtung.

5. Aufwärtsströmungsbrenner mit einer zentralen Wirbelausstoßstruktur nach Anspruch 1, wobei der Gasverteilungssitz (10) und der Ausstoßrohrsitz (20) mit einer abdichtenden Vorsprungrippe (11) und einer abdichtenden Nut (21) versehen sind, die ineinander passen; und die abdichtende Vorsprungrippe (11) und die abdichtende Nut (21) an den Außenkanten des Innenring-Ausstoßkanals (50) und der ringförmigen Spiralkammer (40) angeordnet sind.

## Revendications

1. Un brûleur à entraînement par le haut doté d'une structure d'éjection par tourbillon central, comprenant un siège de distribution de gaz (10) et un siège de tube d'éjection (20), dans lequel
le siège de distribution de gaz (10) est disposé au-dessus du siège du tube d'éjection (20) ; le siège de distribution de gaz (10) et le siège du tube d'éjection (20) s'enserrent pour former une chambre annulaire de mélange de gaz en anneau intérieur (30) qui s'étend verticalement ;
le siège du tube d'éjection (20) est muni d'une chambre annulaire en spirale (40) et d'un canal d'éjection en anneau intérieur (50) ; la partie supérieure de la chambre annulaire en spirale (40) communique avec la chambre de mélange de gaz en anneau intérieur (30), et la partie inférieure communique avec le canal d'éjection en anneau intérieur (50) ; la chambre annulaire en spirale (40) est disposée en une structure annulaire de spirale ; et dans le sens du débit et de la rotation du gaz, la taille de la section transversale de la chambre annulaire en spirale (40) diminue graduellement.

2. Le brûleur à entraînement par le haut doté d'une structure d'éjection par tourbillon central selon la revendication 1, dans lequel une surface de paroi inférieure du canal d'éjection en anneau intérieur (50) est disposée de manière oblique ; et dans le sens du débit et de l'alimentation en aval du gaz, la taille de la section transversale du canal d'éjection en anneau intérieur (50) diminue graduellement.

3. Le brûleur à entraînement par le haut doté d'une structure d'éjection par tourbillon central selon la revendication 1, dans lequel la chambre de mélange de gaz en anneau intérieur (30) comprend une chambre de mélange de gaz supérieure (31) et une chambre de mélange de gaz inférieure (32) qui communiquent l'une avec l'autre ; la chambre de mélange de gaz supérieure (31) est disposée au-dessus de la chambre de mélange de gaz inférieure (32) ; et la chambre de mélange de gaz inférieure (32) communique avec la chambre annulaire en spirale (40).

4. Le brûleur à entraînement par le haut doté d'une structure d'éjection par tourbillon central selon la revendication 3, dans lequel la taille de la section transversale de la chambre de mélange de gaz inférieure (32) dans la direction radiale horizontale est supérieure à celle de la section transversale de la chambre de mélange de gaz supérieure (31) dans la direction radiale horizontale ; et la taille de la section transversale de la chambre annulaire en spirale (40) est supérieure à celle de la section transversale de la chambre de mélange de gaz inférieure (32) dans la direction radiale horizontale.

5. Le brûleur à entraînement par le haut doté d'une structure d'éjection par tourbillon central selon la revendication 1, dans lequel le siège de distribution de gaz (10) et le siège du tube d'éjection (20) sont munis d'une nervure convexe d'étanchéité (11) et d'une rainure d'étanchéité (21) qui s'emboîtent l'une dans l'autre ; et la nervure convexe d'étanchéité (11) et la rainure d'étanchéité (21) sont disposées sur les bords externes du canal d'éjection en anneau intérieur (50) et de la chambre annulaire en spirale (40).
